# EUROPÄISCHE PATENTSCHRIFT

(11) **EP 2 699 604 B1**
(45) Veröffentlichungstag und Bekanntmachung des Hinweises auf die Patenterteilung: **25.10.2017**
(21) Anmeldenummer: 12715394.8
(22) Anmeldetag: 19.04.2012
(51) Int. Cl.: C08C 1/15, C08F 36/18

(54) **VERFAHREN ZUR GEWINNUNG UND ISOLIERUNG VON POLYCHLOROPREN-FESTSTOFFEN**
METHOD FOR OBTAINING AND ISOLATING POLYCHLOROPRENE SOLIDS
PROCÉDÉS DE PRODUCTION ET D'ISOLATION DE SUBSTANCES SOLIDES DE POLYCHLOROPRÈNE

(30) Priorität: 21.04.2011 EP 11163559
(43) Veröffentlichungstag der Anmeldung: 26.02.2014
(73) Patentinhaber: ARLANXEO Deutschland GmbH, 41540 Dormagen (DE)
(72) Erfinder: NEUNER, Thomas-Oliver, 40721 Hilden (DE); STANGE, Heiner, 51379 Leverkusen (DE); JOSTEN, Rolf, 41469 Neuss (DE); FELLER, Rolf, 40822 Mettmann (DE); FIDAN, Mesut, 41539 Dormagen (DE)
(74) Vertreter: Wichmann, Birgid
(86) Internationale Anmeldenummer: PCT/EP2012/057191
(87) Internationale Veröffentlichungsnummer: WO 2012/143459

(56) Entgegenhaltungen:
- EP-A1- 0 353 802
- GB-A- 1 397 658
- US-A- 3 437 509
- US-A- 4 539 396

## Beschreibung

Die Erfindung betrifft ein Verfahren zur Gewinnung und Isolierung von Polychloropren-Feststoffen auf Basis von Kautschuk-Dispersionen und die so hergestellten Polychloropren-Feststoffen.

Die Polychloropren-Herstellung ist seit langem bekannt. Durch radikalische Emulsionspolymerisation von Chloropren (2-Chlor-1,3-butadien) werden Latices aus Polychloropren hergestellt. Derartige Latices werden im Rahmen dieser Anmeldung auch als "Polychloropren-Latices" oder "Polychloropren-Dispersionen" bezeichnet.

Bei der Herstellung werden in einem wässrigen Medium die Monomere in einem Emulgatorsystem polymerisiert. Dieses ist in der Regel anionischer Natur, in seltenen Fällen kommen auch nichtionische oder kationische Systeme zum Einsatz. Der Temperaturbereich, in dem die Polymerisation durchgeführt wird, umfasst Werte von ca. 0°C bis über 80°C. Somit kann die Polymerisation durch thermisch zerfallende Radikalbildner initiiert werden oder durch Redoxsysteme. In der Regel kommen auch Molekulargewichtsregler wie Mercaptane oder Xanthogertdisulfide zum Einsatz. In einigen Fällen wird das Molekulargewicht des Endproduktes auch durch Copolymerisation mit Schwefel und anschließende Spaltung der dabei entstehenden sulfidischen Bindungen eingestellt. Der erwünschte Umsatz wird durch Abstoppen der Reaktion mit einem geeigneten Reagenz eingestellt.

In der weit überwiegenden Zahl der Fälle wird die so erhaltene Dispersion von Polychloropren in Wasser nachfolgend mittels Durchleiten von Wasserdampf entmonomerisiert. Ein Teil des dabei erhaltenen Produktes findet unmittelbar als Latex industrielle Verwendung, der größere Teil jedoch wird durch Koagulation von anhaftendem Wasser befreit und als festes Produkt seiner endgültigen Verwendung zugeführt.

Polychloropren-F eststoffe (sogenannter "CR-Feststoffe") sowie daraus hergestellte Vulkanisate zeichnen sich bei entsprechendem Mischungsaufbau durch hohe Wetter- und Ozonbeständigkeit, durch Flammwidrigkeit, sehr gute Alterungseigenschaften, mittlere Ölbeständigkeit sowie durch beträchtliche Widerstandsfähigkeit gegen viele Chemikalien aus. Sie haben gute mechanische Eigenschaften, ein günstiges elastische Verhalten und ein hohe Verschleißfestigkeit.

Vulkanisate aus Polychloropren-Latices (CR-Latices) weisen hinsichtlich Elastizität, Zugfestigkeit, Bruchdehnung und Modul Werte auf, die denen von Naturlatex-Vulkanisaten sehr ähneln, gleichzeitig zeigen sie auch eine gute Lösungsmittel-, Chemikalien-, Öl- und Fettbeständigkeit.

Wie oben erwähnt, geschieht die Abtrennung des CR-Feststoffes aus der Dispersion üblicherweise durch Koagulation. Hierzu sind eine Reihe verschiedener Verfahren bekannt. Durch Mischen der Polychloropren-Latices mit einem Koagulationsmittel wird die Emulsion aufgebrochen. Zu diesem Zweck kann jedes gewöhnliches Koagulationsmittel verwendet werden. So kann man zum Beispiel aus CR-Latices, die unter alkalischen Bedingungen hergestellt wurden, der Feststoff durch Ansäuern, beispielsweise mit einer Mineralsäure oder einer organischen Säure, koagulieren. In vielen Fällen reicht das bloße Ansäuern zur vollständigen Koagulation des Polychloroprens nicht aus, so dass man zusätzlich zur Säure noch starke Elektrolyte (Salze, die mehrwertige Kationen wie Mg²⁺, Ca²⁺ oder Al³⁺ enthalten) zusetzen muss.

Nachteilig bei dieser Methode ist die große Menge an Säure bzw. Elektrolyte, um eine vollständige Ausfällung des Feststoffes zu erreichen. Dabei verbleiben relativ große Mengen an Fällmittel im Produkt, was zu einer Verschlechterung wichtiger Produkteigenschaften führen kann. Daher wird der koagulierte Feststoff zur Entfernung des Fällmittels mit relativ großen Wassermengen gewaschen, was zu ökonomischen und ökologischen Problemen führt. Ferner fällt das Polychloropren teilweise in Form großer Klumpen aus, die in ihrem Inneren entweder noch ungefällten CR-Latex oder überschüssiges Fällmittel enthalten.

Auch ist aus dem Stand der Technik bekannt, die Koagulation durch Einwirkung höherer Temperaturen und/oder erhöhten Drücken sowie durch zusätzliche Einwirkung von Elektrolyten und Scherkräften zu ermöglichen. Ein derartiges Produkt wird einer erheblichen thermischen Belastung ausgesetzt, was zu einer Verschlechterung der Produkteigenschaften führt.

Üblicherweise wird Polychloropren aus wässrigen Dispersionen durch Ausfrieren abgetrennt. Dabei wird durch Abkühlen unter den Gefrierpunkt der wässrigen Phase der CR-Latex ausgefroren. Beim anschließenden Auftauen unter geeigneten Bedingungen liegt das Polychloropren als Koagulat vor und kann von der wässrigen Phase abgetrennt werden.

Um zu technisch ausreichend großen Koagulationsgeschwindigkeiten zu kommen, wird der CR-Latex in dünnen Schichten ausgefroren. Dazu wurden von innen kühlbare Koagulationswalzen entwickelt, die rotierend in den CR-Latex eintauchen und dabei eine dünne Latexschicht beim Rotieren mitnehmen und auf der Oberfläche ausfrieren (US-B 2,187,146). Der dünne Film aus CR-Koagulat und Eis wird mit einem Schaber von der Walze abgenommen und weitergeleitet.

Aus dem Stand der Technik sind weitere Isolierungsverfahren bekannt. US 4,103,074 beschreibt ein Verfahren zur Koagulierung eines Polymer-Latex unter Verwendung eines Schneckenextruders, wobei der Polymer-Latex während der Förderung im Schneckengang koaguliert wird.

US 3,926,877 beschreibt ein Verfahren zur Isolierung eines CR-Kautschuks, wobei der CR-Latex mit einer wässrigen Rußdispersion gemischt wird, bevor dieser mit einem Koagulierungsmittel versetzt wird. Das koagulierte Produkt wird aus der wässrigen Phase abgetrennt.

DE 30 31 088 C2 offenbart ein Verfahren zur Herstellung eines koagulierten Latex eines synthetischen Polymers, wobei ein gasförmiges oder flüssiges Koagulierungsmittel in Form eines Nebels mittels einer Spraydüse auf das Polymerlatex-Tröpfchen aufgebracht wird, so dass Polymerkügelchen ausgefällt werden.

US 3 437 509 A beschreibt die Koagulation von Emulsionen auf porösen Substraten mit Dampf, der latexdestabilisierende Substanzen enthält. Die Koagulation zur Herstellung von Polychloroprenfeststoff ist nicht offenbart.

US 4 539 396 A beschreibt die Koagulation von Latex mit Dampfund Koagulationsmittel in Form von Dampf oder Nebel. Latex, Koagulationsmittel und Dampf werden gleichzeitig in einen Koagulationsbehälter gesprüht. Die Verwendung von Polychloropren-Latex wird nicht beschrieben. Die Aufgabe besteht in der Bereitstellung runder Polymerpartikel, welche durch Anwendung hoher Temperaturen gelöst wird.

EP 0 353 802 A beschreibt die Rückgewinnung von Kautschukkrümeln, die durch Emulsionspolymerisation hergestellt wurden. Die Koagulation erfolgt dabei nicht durch den Kontakt mit Wasserdampf sondern durch mechanische Einwirkung

GB 1 397 658 A beschreibt die Koagulation von Latex mit Dampf. Vor der Zugabe des Dampfes kann eine den Latex destabilisierende Substanz zugefügt werden. Dabei soll die Konzentration an Fällungsmittel unterhalb des Grenzwerts gehalten werden, ab dem die spontane Fällung erfolgt.

Das bekannteste und weitverbreitete Verfahren zur Isolierung von CR-Feststoffen ist das Gefrierkoagulationsverfahren. Dieses Verfahren weist ökologische und ökonomische Nachteile auf, da das auf der Walze ausgefrorene Koagulat sehr schwer von der Walze abzutrennen ist. Das vereiste Koagulat muss wieder aufgetaut und mit Wasser vom Emulgator befreit werden, was wiederum aus ökologischer Sicht nicht wünschenswert ist.

Auch die danach anschließende mechanische Entwässerung des Koagulats bedarf viel Energiezufuhr und Zeit. Zur endgültigen Trocknung des Koagulats werden üblicherweise Trocknungsöfen verwandt, in denen das restliche, im Produkt enthaltende Wasser entfernt wird.

Aufgabe der Erfindung ist es nun, ein Verfahren zur Gewinnung und Isolierung von Polychloropren-Feststoffen bereitzustellen, welches die oben genannten Nachteile nicht aufweist.

Zur Lösung dieser Aufgabe wird ein Verfahren der Eingangs genannten Art vorgeschlagen, wobei eine wässrige Polychloropren-Dispersion mit Koagulationsmittel enthaltendem Wasserdampf in Kontakt gebracht wird, wodurch der Polychloropren-Feststoff koaguliert.

Beim erfindungsgemäßen Verfahren koaguliert der CR Feststoff vorzugsweise in Strangform oder als Krümel.

Überraschenderweise wurde festgestellt, dass das erfindungsgemäße Verfahren bei allen Polychloropren-Dispersionen eingesetzt werden kann, unabhängig davon nach welchem herkömmlichen Polymerisationsverfahren diese hergestellt wurden.

Das erfindungsgemäße Verfahren ist energieeffizienter, ressourcenschonender und damit umweltverträglicher.

Der ausgefällte Polychloropren-Feststoff wird anschließend aus der Koagulationssuspension abgetrennt und dann vorzugsweise in einer Entwässerungsvorrichtung entwässert. Beispielsweise kann hier eine Seiher-Schnecke oder Entwässerungswalzen eingesetzt werden. Andere bekannte Entwässerungsvorrichtungen sind ebenfalls einsetzbar.

Anschließend wird der entwässerte Polychloropren-Feststoff mittels einer Trocknungsvorrichtung getrocknet. Es handelt sich bei der Trocknungsvorrichtung beispielsweise um einen Doppelwellenextruder, eine Trocknungsschnecke oder einen Trocknungskneter. Vorzugsweise können in der Trocknungsvorrichtung Additive und/oder Inerte zugesetzt werden. Hierdurch können die übrigen Produkteigenschaften des erfindungsgemäßen Polychloropren-Feststoffes für jede Anforderung auch nach der Aufarbeitung optimal beeinflusst werden. Additive zur Beeinflussung der Produkteigenschaften sind vorzugsweise zum Beispiel Stabilisatoren, Beschleuniger, Emulgatoren, Laugen, Alterungsschutzmittel und viskositätsbeeinflussende Verarbeitungshilfsmittel. Es können alle herkömmlichen Additive eingesetzt werden. Inerte sind zum Beispiel Stickstoff, Argon, Kohlenstoffdioxid, welche zur Beeinflussung der Polymerschmelztemperaturen zugesetzt werden.

Der erfindungsgemäße Polychloropren-Feststoff wird bevorzugt mittels der Unterwassergranulierung granuliert und gekühlt.

Vorzugsweise handelt es sich bei der Polychloropren-Dispersion um einen Latex, welcher mittels der Emulsionspolymerisation hergestellt wurde. Die Polymerisation erfolgt zwischen 5°C und 50 °C Polymerisationstemperatur. Der Polymerisationsumsatz liegt üblicherweise im Bereich von 50% bis 80% liegt. Nach der Polymerisation wird überschüssiges Monomer mittels Vakuum-Entgasung auf einen Wert im Bereich von 1000ppm bis 1ppm entfernt. Emulsionspolymerisationsverfahren sind aus dem Stand der Technik bekannt und können hier eingesetzt werden.

Für die Polymerisation können neben Chloropren (2-Chlor-1,3-Butadien) optional auch noch ein oder mehrere verschiedene Co-Monomere, wie etwa 2,3-Dichlorbutadien, zur Steuerung der Kristallisation zugesetzt werden.

Die Polychloropren-Dispersion, aus der der erfindungsgemäße CR-Feststoff gewonnen wird, weist vorzugsweise einen Feststoffanteil im Bereich von 20 bis 45 Gew.-% und einen Gelanteil im Bereich von 0 bis 10 Gew.-% auf. Der Gelanteil kann jedoch auch gezielt erhöht werden.

Vorzugsweise wird der Koagulationsmittel enthaltende Wasserdampf aus Wasserdampf und einer wässrigen Koagulationsmittellösung gebildet. Als Koagulationsmittellösung wird bevorzugt eine wässrige Lösung eines Koagulationsmittels aus anorganischen Salzen, bevorzugt von Metallen der zweiten und dritten Hauptgruppe des Periodensystems, eingesetzt.

Als Koagulationsmittel wird bevorzugt Calciumchlorid, Magnesiumchlorid, Magnesiumsulfat, Aluminiumchlorid und/oder Aluminiumsulfat eingesetzt.

Vorzugsweise weist die Koagulationsmittellösung eine Koagulationsmittel-Konzentration zwischen 1 Gew.-% und 60 Gew.-%, bevorzugt zwischen 2 Gew.-% und 55 Gew.-%, besonders bevorzugt zwischen 10 Gew.-% und 35 Gew.-%, bezogen auf die Koagulationsmittellösung, auf.

Bevorzugt wird die Polychloropren-Dispersion vor dem Kontakt mit dem Koagulationsmittel enthaltenden Wasserdampf verdünnt.

Dabei wird die Polychloropren-Dispersion vorzugsweise auf einen Feststoffgehalt von 38 Gew.-% bis 45 Gew.-%, bevorzugt von 28 Gew.-% bis 35 Gew.-% und besonders bevorzugt von 20 Gew.-% bis 28 Gew.-%, bezogen auf die Polychloropren-Dispersion, verdünnt.

Für die Verdünnung wird bevorzugt Wasser, besonders bevorzugt demineralisiertes Wasser eingesetzt.

Die Verdünnung ist insofern wichtig, da nicht nur das Verkleben und Verstopfen der Strömungs-/Koagulationsvorrichtung verhindert bzw. reduziert werden soll, sondern auch eine optimale Koagulation, bedingt durch den Kontakt zwischen der CR-Dispersion und dem Koagulationsmittel enthaltenden Wasserdampf, gewährleistet werden kann.

Besonders bevorzugt werden 80 bis 1000 kg Wasserdampf pro Tonne Feststoff der Polychloropren-Dispersion, bevorzugt 80 bis 300 kg Wasserdampf pro Tonne Feststoff der Polychloropren-Dispersion, eingesetzt.

Des Weiteren werden 10 bis 40 kg Koagulationsmittel pro Tonne Feststoff der Polychloropren-Dispersion, bevorzugt 10 bis 25 kg Koagulationsmittel pro Tonne Feststoff der Polychloropren-Dispersion, eingesetzt.

Für die Koagulation durchläuft die wässrige Polychloropren-Dispersion eine Strömungs-/Koagulationsvorrichtung, wobei die Strömungs-/ Koagulationsvorrichtung Aussparungen aufweist, durch die der Koagulationsmittel enthaltende Wasserdampf durchtreten kann und in der Strömungs-/Koagulationsvorrichtung auf die Polychloropren-Dispersion trifft. Dabei koaguliert der erfindungsgemäße Polychloropren-Feststoff.

Bevorzugt wird der Polychloropren-Feststoff in der Entwässerungsvorrichtung bis zu einer Restfeuchte von 10 Gew.-% bis 15 Gew.-%, bevorzugt 1,0 Gew.-% bis 9 Gew.-%, bezogen auf den Polychloropren-Feststoff, entwässert.

In der Trocknungsvorrichtung wird der entwässerte Polychloropren-Feststoff vorzugsweise bis zu einer Restfeuchte von 1 Gew.-% bis 1,5 Gew.-%, besonders bevorzugt 0,5 Gew.-% bis 1 Gew.-% und ganz besonders bevorzugt 0,1 Gew.-% bis 0,5 Gew.-%, bezogen auf den entwässerten Polychloropren-Feststoff, getrocknet.

Am Ende der Trocknungsphase in der Trocknungsvorrichtung liegt der Polychloropren-Feststoff als Kautschukschmeize vor. Die Schmelze tritt durch eine Kopfplatte aus und wird mit einer Schneidvorrichtung konfektioniert und in der Unterwassergranulierung durch Wasser gekühlt und transportiert.

Vorzugsweise wird dem Wasser in der Unterwassergranulierung ein Trennmittel zugesetzt. Als Trennmittel kommen hier beispielsweise Talkum, Metallstearate in Frage. Andere herkömmliche Trennmittel sind ebenfalls vorstellbar.

Der so hergestellte Polychloropren-Feststoff kann zur Herstellung von Vulkanisaten, Gummimischungen und Klebstoffen oder Klebstoffrohstoffen verwendet werden.

Nachstehend wird die Erfindung anhand einer Zeichnung näher erläutert:

### Verfahren zur Isolierung und Gewinnung eines erfindungsgemäßen Polychloropren-Feststoffes

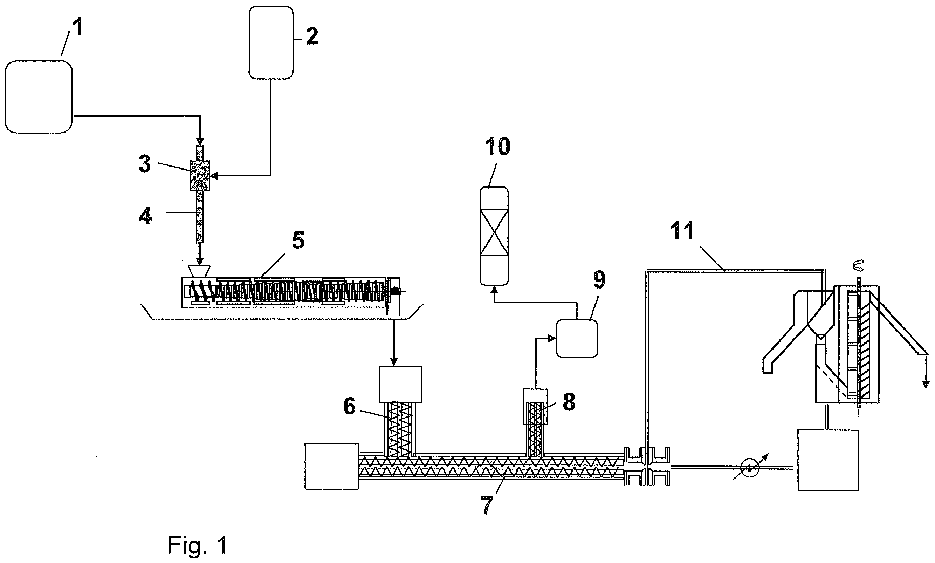

Fig. 1 zeigt einen schematischen Aufbau eines erfindungsgemäßen Verfahrens.

Zunächst wird eine Polychloropren-Dispersion nach herkömmlichem Verfahren hergestellt.

### Herstellung einer Polychloropren-Dispersion

Die Herstellung einer Polychloropren-Dispersion erfolgt unter Einsatz der unten genannten Grundrezeptur (Angaben sind in Gew.-Teilen pro 100 Gew.-Teile eingesetztes Chloropren):

| | |
|---|---|
| 125 Gew.-Teile | Wasser |
| 100 Gew.-Teile | Chloropren |
| 3 Gew.-Teile | Natrium Salz der disproportionierten Abietinsäure |
| 0,5 Gew.-Teile | Kaliumhydoxid |
| 0,2 Gew.-Teile | n-Dodecylmerkaptan |
| 0,5 Gew.-Teile | Natrium Salz der mit Formaldehyd kondensierten Naphthalinsulfonsäure |

Die Polychloropren-Dispersion wird durch radikalische Emulsionspolymerisation zwischen 40°C und 45°C aus den vorgenannten Komponenten nach üblichen Methoden (z. B. Ullmanns Enciclopedia of Industrial Chemistry, Vol 23A, S. 252-262.) hergestellt. Die Polymerisation wird bei einem Umsatz zwischen 50% und 70% abgestoppt und die Dispersion durch Vakuum-Entgasung von Restmonomeren befreit.

Mithilfe des erfindungsgemäßen Verfahrens wird diese Dispersion aufgearbeitet, das wie folgt beschrieben werden kann:
Die o. g. Polychloropren-Dispersion wird aus einem Lagerbehälter 1 in einer Strömungs-/Koagulationsvorrichtung 3 gefördert. Vor Einlauf in die Strömungs-/Koagulationsvorrichtung 3 kann die Polychloropren-Dispersion mit Wasser verdünnt werden.

Aus einem weiteren Lagerbehälter 2 wird das wässrige Koagulationsmittel, welches vorab mit Wasserdampf gemischt wurde, der Strömungs-/Koagulationsvorrichtung 3 zugeführt und über deren Aussparungen mit der Polychloropren-Dispersion in Kontakt gebracht. Hierbei wird die Polychloropren-Dispersion in der Strömungs-/Koagulationsvorrichtung 3 und im nachfolgendem Fällrohr 4 quantitativ gefällt wird.

Das Fällrohr 4 mündet in den Einzugsbereich der Entwässerungsvorrichtung 5, dort wird der erfindungsgemäße ausgefällte Polychloropren-Feststoff entwässert.

Der entwässerte Polychloropren-Feststoff wird entweder als Strang oder als Krümel der Trocknungsvorrichtung 7 zugeführt und getrocknet. Um die Produkteigenschaften des erfindungsgemäßen Polychloropren-Feststoffes zu beeinflussen, können in der Zuführschnecke 6 oder im nachfolgenden Bereich der Trocknungsvorrichtung 7 Additive oder Inerte zudosiert werden.

Über unter Vakuum stehende Döme 8 werden die Brüden abgezogen und die Rückhaltung von Kautschukpartikeln mit Stopfschnecken in den Dömen 8 gewährleistet. Hinter den Dömen 8 befinden sich Abscheider 9, in denen mitgerissene Kautschukpartikel abgeschieden und nachfolgend einem Abluftwäscher 10 zugeführt werden.

Die heiße Kautschukschmelze aus der Trocknungsvorrichtung 7 wird in der Unterwassergranulierung über eine Kopfplatte und Schneidmesser in Chips geschnitten. Das Abkühlen und der Transport der Chips erfolgt über einen Wasserstrom 11, der wahlweise mit Additiven (z.B. Trennmittel) versetzt sein kann

Die Chips werden zunächst über eine Siebrutsche vom Wasser getrennt. Die Restenergie der Chips verdampft das an der Oberfläche anhaftende Wasser. Ergänzend kann ein warmer Luftstrom das Entfernen des anhaftenden Wassers unterstützen.

Danach werden die Chips weiter abgekühlt und ggf. talkumiert. Anschließend werden sie in Säcke verwogen und auf Paletten oder in Kisten verpackt.

## Patentansprüche

1. Verfahren zur Isolierung und Gewinnung von Polychloropren-Feststoffen, **dadurch gekennzeichnet, dass** eine wässrige Polychloropren-Dispersion mit Koagulationsmittel enthaltendem Wasserdampf in Kontakt gebracht wird, wodurch der Polychloropren-Feststoff koaguliert.

2. Verfahren nach Anspruch 1, **dadurch gekennzeichnet, dass** der Polychloropren-Feststoff aus der Koagulationssuspension abgetrennt wird.

3. Verfahren nach Anspruch 2, **dadurch gekennzeichnet, dass** der Polychloropren-Feststoff mittels einer Entwässerungsvorrichtung entwässert wird.

4. Verfahren nach Anspruch 3, **dadurch gekennzeichnet, dass** der entwässerte Polychloropren-Feststoff mittels einer Trocknungsvorrichtung getrocknet wird.

5. Verfahren nach Anspruch 4, **dadurch gekennzeichnet, dass** dem entwässerten Polychloropren-Feststoff in der Trocknungsvorrichtung Additive und/oder Inerte zugesetzt werden.

6. Verfahren nach Anspruch 5, **dadurch gekennzeichnet, dass** der getrocknete, entwässerte, Polychloropren-Feststoff mittels der Unterwassergranulierung granuliert und gekühlt wird.

7. Verfahren nach Anspruch 6, **dadurch gekennzeichnet, dass** die Polychloropren-Dispersion ein Latex ist.

8. Verfahren nach Anspruch 7, **dadurch gekennzeichnet, dass** die Polychloropren-Dispersion mittels der Emulsionspolymerisation hergestellt wird.

9. Verfahren nach Anspruch 8, **dadurch gekennzeichnet, dass** der Koagulationsmittel enthaltende Wasserdampf mittels Wasserdampf und einer wässrigen Koagulationsmittelösung gebildet wird.

10. Verfahren nach Anspruch 9, **dadurch gekennzeichnet, dass** als Koagulationsmittellösung eine wässrige Lösung aus anorganischen Salzen (Koagulationsmittel), bevorzugt von Metallen der zweiten und dritten Hauptgruppe des Periodensystems, eingesetzt wird.

11. Verfahren nach Anspruch 10, **dadurch gekennzeichnet, dass** als Koagulationsmittel Calciumchlorid, Magnesiumchlorid, Magnesiumsulfat, Aluminiumchlorid und/oder Aluminiumsulfat eingesetzt wird.

12. Verfahren nach Anspruch 11, **dadurch gekennzeichnet, dass** die Koagulationsmittellösung eine Koagulationsmittel-Konzentration zwischen 1 Gew.-% und 60 Gew.-%, bevorzugt zwischen 2 Gew.-% und 45 Gew.-%, besonders bevorzugt zwischen 10 Gew.-% und 35 Gew.-%, bezogen auf die Koagulationsmittellösung aufweist.

13. Verfahren nach Anspruch 12, **dadurch gekennzeichnet, dass** die Polychloropren-Dispersion vor dem Kontakt mit dem Koagulationsmittel enthaltenden Wasserdampf verdünnt wird.

14. Verfahren nach Anspruch 13, **dadurch gekennzeichnet, dass** die Polychloropren-Dispersion auf einen Feststoffgehalt von 38 Gew.-% bis 45 Gew.-%, bevorzugt von 28 Gew.-% - 35 Gew.-% und besonders bevorzugt von 20 Gew.-% - 28 Gew.-%, bezogen auf die Polychloropren-Dispersion verdünnt wird.

15. Verfahren nach Anspruch 9, **dadurch gekennzeichnet, dass** 80 kg bis 1000 kg Wasserdampf / t Feststoff der Polychloropren-Dispersion, bevorzugt 80 kg bis 250 kg Wasserdampf / t Feststoff der Polychloropren-Dispersion eingesetzt wird.

16. Verfahren nach Anspruch 11, **dadurch gekennzeichnet, dass** 10 bis 40 kg Koagulationsmittel / t Feststoff der Polychloropren-Dispersion, bevorzugt 10 kg bis 25 kg Koagulationsmittel / t Feststoff der Polychloropren-Dispersion eingesetzt wird.

17. Verfahren nach Anspruch 16, **dadurch gekennzeichnet, dass** die wässrige Polychloropren-Dispersion eine Strömungs-/Koagulationsvorrichtung durchströmt, wobei die Strömungs-/Koagulationsvorrichtung Aussparungen aufweist, durch die der Koagulationsmittel enthaltende Wasserdampf durchtreten kann und in der Strömungs-/Koagulationsvorrichtung auf die Polychloropren-Dispersion trifft.

18. Verfahren nach Anspruch 3, **dadurch gekennzeichnet, dass** der Polychloropren-Feststoff in der Entwässerungsvorrichtung bis zu einer Restfeuchte von 10 Gew.-% bis 15 Gew.-%, bevorzugt 1,0 Gew.-% bis 9 Gew.-%, bezogen auf den Polychloropren-Feststoff entwässert wird.

19. Verfahren nach Anspruch 4, **dadurch gekennzeichnet, dass** der entwässerte Polychloropren-Feststoff in der Trocknungsvorrichtung bis zu einer Restfeuchte von 1 Gew.-% bis 1,5 Gew.-%, bevorzugt 0,5 Gew.-% bis 1 Gew.-%, besonders bevorzugt 0,1 Gew.-% bis 0,5 Gew.-%, bezogen auf den entwässerten Polychloropren-Feststoff aufweist.

20. Verfahren nach Anspruch 19, **dadurch gekennzeichnet, dass** der getrocknete Polychloropren-Feststoff am Ende der Trocknungsphase in der Trocknungsvorrichtung als Kautschukschmelze vorliegt.

21. Verfahren nach Anspruch 20, **dadurch gekennzeichnet, dass** dem Wasser in der Unterwassergranulierung Trennmittel zugesetzt werden.

## Claims

1. Process for isolating and obtaining polychloroprene solids, **characterized in that** an aqueous polychloroprene dispersion is brought into contact with water vapor comprising coagulating agent, and the polychloroprene solid consequently coagulates.

2. Process according to Claim 1, **characterized in that** the polychloroprene solid is separated from the coagulation suspension.

3. Process according to Claim 2, **characterized in that** the polychloroprene solid is dewatered by means of a dewatering apparatus.

4. Process according to Claim 3, **characterized in that** the dewatered polychloroprene solid is dried by means of a drying apparatus.

5. Process according to Claim 4, **characterized in that** additives and/or inert materials are added to the dewatered polychloroprene solid in the drying apparatus.

6. Process according to Claim 5, **characterized in that** the dried, dewatered polychloroprene solid is pelletized and cooled by means of the underwater pelletization process.

7. Process according to Claim 6, **characterized in that** the polychloroprene dispersion is a latex.

8. Process according to Claim 7, **characterized in that** the polychloroprene dispersion is produced by means of emulsion polymerization.

9. Process according to Claim 8, **characterized in that** the water vapor comprising coagulating agent is formed by means of water vapor and of an aqueous coagulating-agent solution.

10. Process according to Claim 9, **characterized in that** coagulating-agent solution used comprises an aqueous solution made of inorganic salts (coagulating agent), preferably of metals of the second and third main group of the Period Table of the Elements.

11. Process according to Claim 10, **characterized in that** coagulating agent used comprises calcium chloride, magnesium chloride, magnesium sulfate, aluminum chloride, and/or aluminum sulfate.

12. Process according to Claim 11, **characterized in that** the coagulating-agent solution has a coagulating-agent concentration of from 1% by weight to 60% by weight, preferably from 2% by weight to 45% by weight, particularly preferably from 10% by weight to 35% by weight, based on the coagulating-agent solution.

13. Process according to Claim 12, **characterized in that** prior to contact with the water vapor comprising coagulating agent, the polychloroprene dispersion is diluted.

14. Process according to Claim 13, **characterized in that** the polychloroprene dispersion is diluted to a solids content of from 38% by weight to 45% by weight, preferably from 28% by weight to 35% by weight, and particularly preferably from 20% by weight to 28% by weight, based on the polychloroprene dispersion.

15. Process according to Claim 9, **characterized in that** from 80 kg to 1000 kg of water vapor / t of solid of the polychloroprene dispersion are used, preferably from 80 kg to 250 kg of water vapor / t of solid of the polychloroprene dispersion.

16. Process according to Claim 11, **characterized in that** from 10 to 40kg of coagulating agent / t of solid of the polychloroprene dispersion are used, preferably from 10 to 25kg of coagulating agent / t of solid of the polychloroprene dispersion.

17. Process according to Claim 16, **characterized in that** the aqueous polychloroprene dispersion flows through a flow/coagulation apparatus, where the flow/coagulation apparatus has apertures through which the water vapor comprising coagulating agent can pass and encounters the polychloroprene dispersion in the flow/coagulation apparatus.

18. Process according to Claim 3, **characterized in that** the polychloroprene solid is dewatered in the dewatering apparatus as far as a residual moisture level of from 10% by weight to 15% by weight, preferably from 1.0% by weight to 9% by weight, based on the polychloroprene solid.

19. Process according to Claim 4, **characterized in that** the dewatered polychloroprene solid has in the drying apparatus as far as a residual moisture level of from 1% by weight to 1.5% by weight, preferably from 0.5% by weight to 1% by weight, particularly preferably from 0.1% by weight to 0.5% by weight, based on the dewatered polychloroprene solid.

20. Process according to Claim 19, **characterized in that** the dried polychloroprene solid takes the form of rubber melt at the end of the drying phase in the drying apparatus.

21. Process according to Claim 20, **characterized in that** release agents are added to the water in the underwater pelletization process.

## Revendications

1. Procédé de production et d'isolation de solides de polychloroprène, **caractérisé en ce qu'**une dispersion aqueuse de polychloroprène est mise en contact avec de la vapeur d'eau contenant des agents coagulants, ce qui entraîne la coagulation des solides de polychloroprène.

2. Procédé selon la revendication 1, **caractérisé en ce que** les solides de polychloroprène sont séparés de la suspension de coagulation.

3. Procédé selon la revendication 2, **caractérisé en ce que** les solides de polychloroprène sont déshydratés au moyen d'un dispositif de déshydratation.

4. Procédé selon la revendication 3, **caractérisé en ce que** les solides de polychloroprène déshydratés sont séchés au moyen d'un dispositif de séchage.

5. Procédé selon la revendication 4, **caractérisé en ce que** des additifs et/ou des agents inertes sont ajoutés aux solides de polychloroprène déshydratés dans le dispositif de séchage.

6. Procédé selon la revendication 5, **caractérisé en ce que** les solides de polychloroprène déshydratés et séchés sont granulés et refroidis par granulation sous l'eau.

7. Procédé selon la revendication 6, **caractérisé en ce que** la dispersion de polychloroprène est un latex.

8. Procédé selon la revendication 7, **caractérisé en ce que** la dispersion de polychloroprène est fabriquée par polymérisation en émulsion.

9. Procédé selon la revendication 8, **caractérisé en ce que** la vapeur d'eau contenant des agents coagulants est formée au moyen de vapeur d'eau et d'une solution aqueuse d'agents coagulants.

10. Procédé selon la revendication 9, **caractérisé en ce qu'**une solution aqueuse de sels inorganiques (agents coagulants), de préférence de métaux du deuxième et troisième groupe principal du tableau périodique, est utilisée en tant que solution d'agents coagulants.

11. Procédé selon la revendication 10, **caractérisé en ce que** du chlorure de calcium, du chlorure de magnésium, du sulfate de magnésium, du chlorure d'aluminium et/ou du sulfate d'aluminium sont utilisés en tant qu'agents coagulants.

12. Procédé selon la revendication 11, **caractérisé en ce que** la solution d'agents coagulants présente une concentration en agents coagulants comprise entre 1 % en poids et 60 % en poids, de préférence entre 2 % en poids et 45 % en poids, de manière particulièrement préférée entre 10 % en poids et 35 % en poids, par rapport à la solution d'agents coagulants.

13. Procédé selon la revendication 12, **caractérisé en ce que** la dispersion de polychloroprène est diluée avant le contact avec la vapeur d'eau contenant des agents coagulants.

14. Procédé selon la revendication 13, **caractérisé en ce que** la dispersion de polychloroprène est diluée à une teneur en solides de 38 % en poids à 45 % en poids, de préférence de 28 % en poids à 35 % en poids et de manière particulièrement préférée de 20 % en poids à 28 % en poids, par rapport à la dispersion de polychloroprène.

15. Procédé selon la revendication 9, **caractérisé en ce qu'**on utilise 80 kg à 1 000 kg de vapeur d'eau/t de solides de la dispersion de polychloroprène, de préférence 80 kg à 250 kg de vapeur d'eau/t de solides de la dispersion de polychloroprène.

16. Procédé selon la revendication 11, **caractérisé en ce qu'**on utilise 10 à 40 kg d'agents coagulants/t de solides de la dispersion de polychloroprène, de préférence 10 kg à 25 kg d'agents coagulants/t de solides de la dispersion de polychloroprène.

17. Procédé selon la revendication 16, **caractérisé en ce que** la dispersion aqueuse de polychloroprène s'écoule au travers d'un dispositif d'écoulement/de coagulation, le dispositif d'écoulement/de coagulation comprenant des fenêtres au travers desquelles la vapeur d'eau contenant des agents coagulants peut passer et rencontrer la dispersion de polychloroprène dans le dispositif d'écoulement/de coagulation.

18. Procédé selon la revendication 3, **caractérisé en ce que** les solides de polychloroprène sont déshydratés dans le dispositif de déshydratation jusqu'à une humidité résiduelle de 10 % en poids à 15 % en poids, de préférence de 1,0 % en poids à 9 % en poids, par rapport aux solides de polychloroprène.

19. Procédé selon la revendication 4, **caractérisé en ce que** les solides de polychloroprène déshydratés présente dans le dispositif de séchage jusqu'à une humidité résiduelle de 1 % en poids à 1,5 % en poids, de préférence de 0,5 % en poids à 1 % en poids, de manière particulièrement préférée de 0,1 % en poids à 0,5 % en poids, par rapport aux solides de polychloroprène déshydratés.

20. Procédé selon la revendication 19, **caractérisé en ce que** les solides de polychloroprène séchés se présentent à la fin de la phase de séchage dans le dispositif de séchage sous la forme d'une masse fondue de caoutchouc.

21. Procédé selon la revendication 20, **caractérisé en ce que** des agents antiagglomérants sont ajoutés à l'eau dans la granulation sous l'eau.
